(19) Europäisches Patentamt / European Patent Office / Office européen des brevets

(11) **EP 3 187 511 B1**

(12) **EUROPEAN PATENT SPECIFICATION**

(45) Date of publication and mention of the grant of the patent:
**04.12.2019 Bulletin 2019/49**

(51) Int Cl.:
*A23C 9/154* (2006.01)   *A23L 29/206* (2016.01)
*C08B 37/00* (2006.01)   *A23L 2/66* (2006.01)
*A23J 3/00* (2006.01)

(21) Application number: **15836533.8**

(22) Date of filing: **26.08.2015**

(86) International application number:
**PCT/JP2015/074008**

(87) International publication number:
**WO 2016/031859 (03.03.2016 Gazette 2016/09)**

(54) **METHOD FOR PRODUCING WATER-SOLUBLE PEA POLYSACCHARIDE**

VERFAHREN ZUR HERSTELLUNG VON WASSERLÖSLICHEM ERBSENPOLYSACCHARID

PROCÉDÉ DE PRODUCTION D'UN POLYSACCHARIDE DE POIS SOLUBLE DANS L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2014 JP 2014174461**

(43) Date of publication of application:
**05.07.2017 Bulletin 2017/27**

(73) Proprietor: **Fuji Oil Holdings Inc.**
**Osaka 598-8540 (JP)**

(72) Inventors:
• **SATO, Minami**
  **Tsukubamirai-shi**
  **Ibaraki 300-2436 (JP)**
• **ASAI, Yuji**
  **Tsukubamirai-shi**
  **Ibaraki 300-2436 (JP)**
• **HATTORI, Mitsuo**
  **Tsukubamirai-shi**
  **Ibaraki 300-2436 (JP)**

(74) Representative: **Boult Wade Tennant LLP**
**Salisbury Square House**
**8 Salisbury Square**
**London EC4Y 8AP (GB)**

(56) References cited:
EP-A2- 0 251 163      WO-A1-91/15517
WO-A1-2007/139057     WO-A1-2012/176852
WO-A1-2012/176852     WO-A1-2013/191030
WO-A1-2014/103833     WO-A1-2014/103833
WO-A1-2014/103987     WO-A1-2015/020024
WO-A1-2015/020024

## Description

Technical Field

The present invention relates to a method for producing a water-soluble pea polysaccharide.

Background Art

A food which is obtained by fermenting a protein beverage, such as milk or soy milk, with a microorganism such as lactic acid bacterium or a food which is obtained by adding an inorganic or organic acid to the protein beverage is called as an acidic protein food, including beverage. Such an acidic protein food includes acidic protein beverage, acidic frozen dessert, and acidic dessert. Milk protein or soybean protein, which is contained in these acidic protein foods, in particular acidic protein beverage, shows a problem that aggregation is occurred around pH4.5, which is the isoelectric point thereof, or more acidic side. A food product in which protein is aggregated, precipitated or separated loses most of its commercial value.

Therefore, a dispersion stabilizer is added in order to disperse protein under the condition around the isoelectric point or more acidic condition. High methoxyl pectin (HM-pectin) and carboxymethyl cellulose (CMC) maintain a dispersion of protein particles in pH 4.2 to 4.6 with the electrostatic repulsive action and molecular network. However, they give a characteristic viscosity to a beverage, and thereby cause a problem that the beverage tends to have a heavy mouthfeel (Non-Patent Document 1). Water-soluble soybean polysaccharide shows excellent dispersion stabilizing property under more acidic conditions, pH 4.2 or lower. The prepared beverage has low viscosity and smooth mouthfeel, and is easy to drink (Patent Document 1).

Thus, appropriate dispersion stabilizer varies by pH of beverage, and it is necessary to use different stabilizers for each products. To solve this problem, pea polysaccharide, which enables to stabilize the dispersion of protein in a wide pH range of pH 3.4 to 4.5, has been proposed (Patent Document 2).

Prior Art Documents

Patent Documents

Patent Document 1: JP H07-59512 A
Patent Document 2: WO 2012/176852 A1

Non-Patent Documents

Non-Patent Document 1: Nakamura A et al. Food Hydrocolloids 17, p333-343 (2003).

WO2015/020024 provides a water-soluble pea polysaccharide composition comprising 10 to 90 wt% of maltooligosaccharide, wherein the total amount of maltopentaose, maltohexaose, and maltoheptaose contained in the water-soluble pea polysaccharide composition is 30 wt% or greater in terms of the total weight of maltooligosaccharide, the moisture absorption during powder storage that is a problem with conventional water-soluble pea polysaccharides and the resulting discoloration and caking are controlled, color of an aqueous solution of the powder is good, and dispersibility and fluidity of the powder can be improved. EP 0251163 discloses a fiber-containing product based on seeds of leguminous plants which comprises the cell wall ingredients of the seed, said ingredients being isolated upon previous removal of the seed coat. Whole seeds of leguminous plants are shelled to remove the cellulose-containing seed coat and rinsed and steamed then are wet-ground to open the plant cells and to dissolve or suspend the starch particles, proteins, and soluble components contained in the plant cells. Proteins, salts, soluble ingredients, and starch particles are removed as a filtrate through a filtration on a centrifugal sieve followed by a washing, filtration, and pressing of the resulting filter cake to increase the dry matter content before the filter cake is rasped and dried. WO 91/15517 provides a novel low-cost crude pectin-containing vegetable product prepared from agricultural waste products and a method for the production thereof. The product comprises 5-45% pectic substances of which at least 10% are in a water-soluble form. WO 2014/103987 discloses a water-soluble pea polysaccharide that exhibits excellent dispersing ability of each type of inorganic and organic particulate substance.

WO2012/176852 provides a dispersion stabilizer which suppresses precipitation aggregation of proteins in a wide range of pH from 3.2 to 4.8, particularly from near the isoelectric point of protein. WO2013191030 provides a dispersion-stabilizing agent that can prevent the coagulative precipitation of a protein under an acidic environment particularly having a pH value around pH 5, which is nearer to the neutral pH value relative to pH values around isoelectric points of proteins.

WO2014/103833 provides a water-soluble pea polysaccharide to obtain a physical property-improving effect in wheat-based food such as bread, wheat-flour baked sweets, and noodles.

Summary of Invention

Problems to be Solved by Invention

The technique of Patent Document 2 requires a de-esterification step for reducing a methyl esterification degree to 45% or less, preferably 30% or less. Adding the de-esterification step causes increases in an ancillary facility and production cost, or coloring of the polysaccharide as the final product. Thus, there is still a need for improvement. From this point of view, a method for producing a water-soluble pea polysaccharide, which enables to stabilize a dispersion of protein in a wide pH range, without a complicated process, such as de-esterification step, has been desired.

An object of the present invention is to obtain a water-soluble pea polysaccharide, which shows protein dispersion-stabilizing ability in a wide pH range, by a simple method.

Means for Solving the Problems

The present inventors have extensively studied for the above problem. As a result, they have found that a water-soluble pea polysaccharide having an excellent protein dispersion-stabilizing ability is obtained by a simple method without de-esterification reaction, where the method includes extracting a pea fiber material of which 80% or more of particles are distributed in a particle size from 100 $\mu$m or more to 1000 $\mu$m or less as a raw material. The present invention has been completed based on the findings.

That is, the present invention includes:

(1) A method for producing a water-soluble pea polysaccharide, comprising:
grinding a pea fiber material, with a grinder, before, during or after removing starch or protein of the pea fiber material, to adjust that 80% or more particles are distributed in a particle size between 100 $\mu$m and 1000 $\mu$m;

adding water to the pea fiber material;
adjusting the pH to a range from pH 3 to pH 12 with an acid or alkali; and then extracting a water-soluble pea polysaccharide from the pea fiber material at 60°C or more and 150°C or less for 0.5 to 3 hours, wherein the pea fiber material is prepared from pea seed.

(2) A method for producing a water-soluble pea polysaccharide, including extracting a pea fiber material of which 80% or more particles are distributed in a particle size between 100 $\mu$m and 800 $\mu$m;
(3) The method for producing a water-soluble pea polysaccharide of (1) or (2), where a methyl esterification degree of the water-soluble pea polysaccharide is 45% or more;
(4) The method for producing a water-soluble pea polysaccharide of (1) or (2), where a methyl esterification degree of the water-soluble pea polysaccharide is 50% or more;
(5) The method for producing a water-soluble pea polysaccharide of (1) or (2), where a methyl esterification degree of the water-soluble pea polysaccharide is 55% or more;

Effect of the Invention

The present invention enables to produce a water-soluble pea polysaccharide having an excellent protein dispersion-stabilizing ability by a simple method. A water-soluble pea polysaccharide obtained by the production method enables to stabilize a dispersion of protein in a wide pH range, and provide a beverage having low viscosity and smooth mouthfeel.

Mode for Carrying Out the Invention

Embodiments of the present invention will be described in detail in the following.

(Raw material)

A raw material of a water-soluble pea polysaccharide of the present invention is pea seed. Any variety of peas, such as pea, green pea, marrowfat pea, yellow pea, white pea, and red pea, may be used. Particularly, yellow pea is preferably used in the viewpoint of flavor. A pea fiber material prepared from pea bean is preferred as an extraction raw material. In an industrial viewpoint, the pea fiber material is a fraction (residue) obtained by removing outer skin of pea seed, then dry- or wet-grinding the cotyledon portion, and then separating and removing a starch, and more preferably, then separating and removing protein under a dry or wet condition.

(Particle size of pea fiber material)

The pea fiber material which is used as a raw material of extracting water-soluble pea polysaccharide in the present invention is a pea fiber material of which 80% or more of particles are distributed in a particle size from 100 $\mu$m or more to 1000 $\mu$m or less, preferably in a particle size from 100 $\mu$m or more to 800 $\mu$m or less. A water-soluble pea polysaccharide having a high protein dispersion-stabilizing function is selectively extracted by using such a pea fiber material. A particle size of the pea fiber material may be adjusted to the above range by grinding before removing starch or protein, during the step of removing starch or protein, or grinding after the step. Grinding may be performed under a dry condition or a wet condition.

The particle size of the pea fiber material is determined by measuring a particle size distribution with a laser diffraction particle size distribution analyzer (SALD-2300, manufactured by Shimadzu Corporation) after dispersing the pea fiber material into isopropanol. A numerical value obtained by subtracting the cumulative% to 100 $\mu$m of the relative particle amount from the cumulative% to 1000 $\mu$m in the particle size distribution curve obtained by the measurement is referred to as a rate (%) of fiber material distributed in a particle size from 100 $\mu$m or more to 1000 $\mu$m or less with respect to the whole fiber material. In the same manner, numerical value obtained by subtracting the cumulative% to 100 $\mu$m from the cumulative% to 800 $\mu$m is referred to as a rate (%) of fiber material distributed in a particle size from 100 $\mu$m or more to 800 $\mu$m or less with respect to the whole fiber material.

Thus, a feature of the present invention is to grind the pea fiber material with a grinder in order to adjust the particle size to a specific range. Therefore, the pea fiber material of the present invention does not include the one obtained by pelletizing fine particles in which a rate of particles having 100 $\mu$m or less is high.

(Extraction of water-soluble pea polysaccharide)

Appropriate pH range for extracting a water-soluble pea polysaccharide from a pea fiber material is pH 3 to pH 12, preferable pH 4 to pH 10 because a hydrolysis of polysaccharide is promoted under the acidic condition, less than pH 3 and a desorption decomposition of polysaccharide is promoted under the alkaline condition, more than pH 12. The water-soluble pea polysaccharide is extracted by adding water to a raw material, then adjusting the pH to a range from pH 3 to pH 12 with an acid or an alkali, and then extracting at preferably 60°C or more and 150°C or less, more preferably 80°C or more and 130°C or less. The extraction at less than 60°C is less realistic because efficiency of extraction of water-soluble pea polysaccharide is low. The extraction at more than 150°C may cause hydrolysis of the water-soluble pea polysaccharide during the extraction. The extraction time may be adjusted depending on, for example, state of raw material and temperature, generally 0.5 to 3 hours. There is no particular limitation on the acid and alkali used. For example, acid such as hydrochloric acid, sulfuric acid, phosphoric acid, citric acid, tartaric acid, acetic acid, and formic acid, and alkali such as sodium hydroxide, calcium hydroxide, sodium bicarbonate, sodium carbonate, and ammonia may be used. In addition, an high-purity enzyme such as cellulase, hemicellulase and pectinase, which does not hydrolyze the water-soluble pea polysaccharide, may be used alone or in combination in the extraction.

(Purification)

The extracted water-soluble pea polysaccharide may be used after separating and removing an insoluble fiber, but it is preferable to perform purification such as removal of protein, desalting, and removal of colored substance in order to further enhance the function. Examples of a method for removing proteins include a method of aggregating protein with pH adjustment, followed by separating the aggregated proteins by physical means, such as pressure filtration, centrifugation, and membrane separation. As another example, protein may be decomposed with any proteolytic enzyme, and then the enzymatic decomposition product may be absorbed and removed by using dialysis membrane, activated carbon, ion exchange or hydrophobic resin. As a method for desalting, any method may be used, for example, re-precipitation method with using a polar organic solvent such as ethanol, isopropanol, and acetone; activated carbon treatment; resin adsorption treatment; ultrafiltration; reverse osmosis; gel filtration; dialysis; ion exchange resin method; electrodialysis; and ion-exchange membrane method. Examples of the method for removing the colored substance include a method of decomposing the colored substance such as ozone treatment and UV irradiation; and distribution with a hydrophilic polar solvent such as ethanol and isopropanol. It is preferable to use one of the above methods or a combination of two or more of them. The purified water-soluble pea polysaccharide may be used as it is as the aqueous solution, if necessary after the sterilization, or may be used after drying with a method such freeze drying, spray drying, and hot air drying of the ethanol precipitate. If necessary, it may be further ground after drying.

(Removal of starch)

If a water-soluble pea polysaccharide of the present invention contains a lot of amount of starch derived from the raw material pea, precipitation might be occurred after that the water-soluble pea polysaccharide is added to an acidic protein beverage. Accordingly, it is preferable to remove starch, in the stage of pea or its ground product, in the stage of pea fiber material, in the stage of extracting water-soluble pea polysaccharide, or in the stage after the extraction. Examples of the method of removal of starch include degradation with an amylase, cooling precipitation, and flocculation by using emulsifier. It is preferable to use one of the above methods or a combination of two or more of them. Dry fractionation may be used in the stage of raw materials, but wet fractionation is more preferable. For example, starch may be separated as starch grains by adding water to ground raw material, then heating to a temperature at which the starch is not gelatinized, and then subjecting to centrifugal filtration. Further, the starch may be decomposed and removed by heating the water-added raw material to above a temperature at which the starch is gelatinized, and then decomposing with amylase. In the stage of the pea fiber material, the starch may be decomposed and removed by dispersing the fiber into water, then heating to a temperature at which the starch is gelatinized, and then decomposing with amylase. Examples of a method of removing starch in the stage of extraction or after the extraction include a method of adding amylase to the water-added raw material before the extraction, a method of adding amylase to the slurry after the extraction and before the solid-liquid separation, and a method of adding amylase to the filtrate after the solid-liquid separation.

(Methyl esterification degree)

A water-soluble pea polysaccharide of the present invention shows an excellent protein dispersion-stabilizing ability without performing the step of lowering the methyl esterification degree by an ester decomposition reaction. In general, protein dispersion-stabilizing ability is improved by lowering the methyl esterification degree. However, the present invention enables to provide the ability to water-soluble pea polysaccharide which has higher methyl esterification degree. This is an effective aspect of the present invention. Thus, methyl esterification degree is preferably 45% or more, more preferably 50% or more, further preferably 55% or more. The methyl esterification degree is calculated by the formula:

$$\text{Methyl esterified galacturonic acid / total galacturonic acid} \times 100 \ (\%),$$

where the amount of galacturonic acid and methyl-esterified galacturonic acid is quantified in Doesburg titration method.
The same good function is also obtained when an ester decomposition reaction is performed. Thus, if desired, it may be performed.
Any ester decomposition reaction may be performed as long as the method decomposes methyl ester without causing a decomposition of the water-soluble pea polysaccharide. And, the method may be performed in any step during the preparation of the water-soluble pea polysaccharide from the raw material. The ester decomposition reaction may be performed after producing the water-soluble pea polysaccharide in liquid or powder form. In this case, the liquid or powder may be subjected to the reaction directly or after dissolving or dispersing in a solvent. When the ester decomposition reaction is performed to the water-soluble pea polysaccharide after extraction, the reaction becomes possible by adjusting pH of the water-soluble pea polysaccharide aqueous solution to preferably pH 8 or more, more preferably pH 12 or more with adding an alkali. The heating condition is preferably 20°C or more, more preferably 40°C or more. The heating time is preferably 10 minutes or more, more preferably 30 minutes or more, and preferably 4 hours or less. Both the extraction and ester decomposition may be performed simultaneously by adjusting the extraction pH to alkali side. Examples of the alkali used include sodium hydroxide, calcium hydroxide, sodium bicarbonate, sodium carbonate, and ammonia. In addition, the ester decomposition may be performed by using a commercially available pectin methyl esterase, or an enzyme preparation including the enzyme.

(Molecular weight)

A water-soluble pea polysaccharide used in the present invention contains polymeric component, having molecular weight of 10,000 or more, as a constituent component. The polymeric component is defined as a fraction having a molecular weight of 10,000 or more when the molecular weight of the fraction is determined with a gel filtration under the following conditions. An average absolute molecular weight (MM) is preferably from 100,000 to 1,000,000, more preferably from 200,000 to 800,000.

The gel filtration is performed by using HPLC (TSK-gel G-5000PWXL, Tosoh, φ7.8 mm × 300 mm). The average absolute molecular weight (MM) is determined by multi-angle laser light scattering (MALLS), which was calibrated with toluene after passing through the column. The analysis conditions: eluent: 50 mM sodium acetate aqueous solution (pH5.0), flow rate: 1.0mL/min, RI detector and MALLS detector.

(Constituent sugar)

A water-soluble pea polysaccharide used in the present invention contains galacturonic acid, which is an acidic sugar, as a constituent sugar, and arabinose and galactose as a major neutral sugar. A neutral sugar such as glucose, rhamnose, xylose and fucose may be contained as another neutral sugar. The sugar composition of the galacturonic acid, which is an acidic sugar, is preferably 3 to 40 wt%. The sugar composition of the neutral sugar is preferably 60 to 97 wt%. In addition, the sugar composition of arabinose as a neutral sugar is preferably 20 to 50 wt%, and the sugar composition of galactose is preferably 10 to 30 wt%. The total sugar content of the water-soluble pea polysaccharide is determined by colorimetry method using the phenol-sulfuric acid, and the content of the galacturonic acid is determined by colorimetry method using Blumenkrantz method. The sugar content is determined by using an ion chromatography with an electro chemical detector (HPLC-PAD) after the decomposition with a sulfuric acid.

(Dispersion stabilizer)

A water-soluble pea polysaccharide obtained by the method of the present invention acts as a dispersion stabilizer for suppressing an aggregation of protein particles and maintaining a state of stable dispersion. Its function is not limited by the level of methyl esterification degree of the water-soluble pea polysaccharides. For example, it also shows excellent function as a dispersion stabilizer when a high methyl esterification degree, 45% or more. Its effective pH range is wide, from pH 3.4 to pH 4.4, and thus it is suitable for an acidic protein food, especially an acidic protein beverage such as yogurt drink with a fermented milk, and acidic milk beverage prepared by adding acid directly. An adding amount with respect to the acidic protein food is 0.05 to 5 wt%, more preferably 0.1 to 2 wt%, further preferably 0.2 to 1 wt%. The dispersion stabilizer of the present invention may be used in combination with a polymeric component, such as polysaccharide, protein and others or hydrolysate thereof, depending on the physical properties and nature of the acidic protein food. Examples of the composition to be used in combination include starch; modified starch; cellulose and derivative thereof; polysaccharide such as dextrin, inulin, agar, carrageenan, fucoidan, sodium alginate, furcellaran, guar gum, locust bean gum, tamarind seed polysaccharide, tara gum, gum arabic, tragacanth gum, karaya gum, pectin, xanthan gum, pullulan, and gellan gum; protein such as gelatin, and collagen. One or two or more of these compositions may be used.

(Acidic protein food - not part of the invention)

An acidic protein food of the present disclosure is an acidic food containing animal or vegetable protein material. It is obtained by adding fruit juice such as citrus, inorganic acid such as phosphoric acid, organic acid such as citric acid and lactic acid and other acids to a food containing animal or vegetable protein, or fermenting the food with microorganism. Specific examples include acidic protein beverage such as acidic milk beverage obtained by acidifying animal or vegetable protein material-containing drink such as dairy product; acidic ice cream obtained by adding fruit juice etc. to milk protein-containing frozen confectionery such as ice cream; acidic frozen confectionery such as frozen yogurt; acidic dessert obtained by adding fruit juice etc. to gel food such as pudding and bavarois; coffee beverage; pasteurized or unpasteurized lactic acid bacteria beverage; and solid or liquid fermented milk. The fermented milk is a fermented milk obtained by fermenting the above animal or vegetable protein after pasteurization with a lactic acid bacteria or starter. If desired, the fermented beverage may be powdered, or sugar may be added to the fermented beverage.

In addition, the animal or vegetable protein material is a protein material that derived from animal milk or soy milk, etc. Specific examples include milk, goat milk, skim milk, soy milk; whole milk powder, skim milk powder, and soy milk powder obtained by powdering them; sweetened milk obtained by adding sugar to them; concentrated milk obtained by concentrating them; and processed milk obtained by adding mineral such as calcium and vitamin.

The present invention will be described by the following examples. In addition, "%" means wt% unless otherwise described.

(Comparative Example 1) Preparation of pea fiber material (1)

After hulling, 50kg of yellow pea seeds were immersed into 5-fold amount of water for 24 hours. The seeds were ground with a Homomixer (5,000 rpm, 30 minutes), and then protein and starch were extracted. The protein and starch which were dispersed in water was removed by using a centrifugal (1,500 × g, 20 minutes) to recover a fiber. Further, 5-fold amount of water was added to the fiber, then the mixture was stirred with a Homomixer (3,000 rpm, 30 minutes), and then subjected to centrifugal (1,500 × g, 20 min) to recover the fiber. After this operation was repeated twice, the fiber was freeze-dried to obtain 10kg of pea fiber material Z.

(Comparative Example 2) Preparation of pea fiber material (2)

The pea fiber material Z of Comparative Example 1 was ground with a high-speed grinder (Vita-max ABSOLUTE MILL, manufactured by Osaka Chemical Co. Ltd, maximum speed) to obtain pea fiber material A.

(Examples 1 to 6) Preparation of pea fiber material (3)

The pea fiber material A of Comparative Example 1 was further ground with a high-speed grinder (Vita-max ABSOLUTE MILL, manufactured by Osaka Chemical Co. Ltd, maximum speed) to obtain pea fiber material B (Example 1). In a similar manner, the obtained pea fiber material was ground in stages to obtain pea fiber materials C, D, E, F and G (Examples 2 to 6).

(Comparative Example 3) Preparation of pea fiber material (4)

The pea fiber material G of Example 6 was ground with a high-speed grinder (Vita-max ABSOLUTE MILL, manufactured by Osaka Chemical Co. Ltd, maximum speed) to obtain pea fiber material H.

The particle size distribution of pea fiber materials Z, and A to H was measured, and the ratio (%) of fiber particles distributed in the particle size from 100 $\mu$m or more to 1000 $\mu$m or less with respect to the whole fiber material, as well as the ratio (%) of fiber particles distributed in the particle size from 100 $\mu$m or more to 800 $\mu$m or less with respect to the whole fiber material were shown in Table 1. Pea fiber material Z was coarsest material showing 59.5% of the ratio of fiber particles distributed in the particle size from 100 $\mu$m or more to 1000 $\mu$m or less, and about 40% of the ratio of fiber particles having more than 1000 $\mu$m of diameter. The ratio of fiber particles distributed in the particle size from 100 $\mu$m or more to 1000 $\mu$m or less increased from Z to E by grinding in stages. In F, G, and H further ground from E, particles having the particle size of less than 100 $\mu$m was increased and particles having the particle size from 100 $\mu$m or more to 1000 $\mu$m or less were decreased. Thus, the particles became finer in Z, A, B, C, D, E, F, G, and H in the order.

Table 1: Particle size of fibers

|  | Raw material | Distribution ratio of particles having less than 100 $\mu$m of diameter (%) | Distribution ratio of particles having 100 $\mu$m to 1000 $\mu$m of diameter (%) | Distribution ratio of particles having 100 $\mu$m to 800 $\mu$m of diameter (%) | Distribution ratio of particles having more than 1000 $\mu$m of diameter (%) |
|---|---|---|---|---|---|
| Comparative Example 1 | Pea fiber material Z | 0 | 59.5 | 48.9 | 40.5 |
| Comparative Example 2 | Pea fiber material A | 0 | 74.0 | 64.3 | 26.0 |
| Example 1 | Pea fiber material B | 0.2 | 82.8 | 76.4 | 17.0 |
| Example 2 | Pea fiber material C | 0.5 | 87.1 | 82.0 | 12.4 |
| Example 3 | Pea fiber material D | 1.5 | 92.1 | 89.6 | 6.4 |

(continued)

|  | Raw material | Distribution ratio of particles having less than 100 μm of diameter (%) | Distribution ratio of particles having 100 μm to 1000 μm of diameter (%) | Distribution ratio of particles having 100 μm to 800 μm of diameter (%) | Distribution ratio of particles having more than 1000 μm of diameter (%) |
|---|---|---|---|---|---|
| Example 4 | Pea fiber material E | 3.0 | 96.5 | 93.2 | 0.5 |
| Example 5 | Pea fiber material F | 4.5 | 95.5 | 91.9 | 0 |
| Example 6 | Pea fiber material G | 15.7 | 84.3 | 77.5 | 0 |
| Comparative Example 3 | Pea fiber material H | 21.8 | 78.2 | 63.7 | 0 |

(Comparative Examples 4 to 5) Preparation of water-soluble pea polysaccharide (1)

Water-soluble pea polysaccharide was extracted by dispersing 80 parts of pea fiber material Z of Comparative Example 1 into 920 parts of water, adjusting pH of the mixture to 5 with a hydrochloric acid, and then heating at 120°C for 90 minutes. The insoluble fiber was removed by using a centrifugal (5,000 rpm, 30 minutes) and the supernatant was recovered. Amylase (BAN480L: manufactured by Novozymes) corresponding to 0.1 part with respect to 100 parts of solid content of the supernatant was added to the extract to decompose the starch. Ethanol was added to the supernatant so that the ethanol level was 60 wt% to precipitate the water-soluble pea polysaccharide. The precipitate was purified with 90 wt% hydrous ethanol, and then air-dried to obtain water-soluble pea polysaccharide Z (Comparative Example 4).

Instead of pea fiber material Z, pea fiber material A was subjected to the above extraction and purification treatment to obtain water-soluble pea polysaccharide A (Comparative Example 5).

(Examples 7 to 12) Preparation of water-soluble pea polysaccharide (2)

Instead of pea fiber material Z in Comparative Example 4, pea fiber materials B, C, D, E, F and G were subjected to the above extraction and purification treatment, respectively, to obtain water-soluble pea polysaccharides B, C, D, E, F and G (Examples 7 to 12).

(Comparative Example 6) Preparation of water-soluble pea polysaccharide (3)

Instead of pea fiber material Z in Comparative Example 4, pea fiber material H was subjected to the above extraction and purification treatment to obtain water-soluble pea polysaccharide H (Comparative Example 6).

(Comparative Examples 7 to 12)

The solution after removing the insoluble fiber in the preparation of water-soluble pea polysaccharide Z in Comparative Example 4 was adjusted to pH 8 by adding 30% sodium hydroxide solution, and then subjected to ester decomposition reaction at 40°C for 60 minutes. The solution was adjusted to pH 7 with hydrochloric acid, and then subjected to the same steps after addition of amylase as Comparative Example 4 to obtain water-soluble pea polysaccharide Z2 (Comparative Example 7).

In the preparation of water-soluble pea polysaccharide Z2 in Comparative Example 7, the same steps except that the solution pH at the time of the ester decomposition reaction was adjusted to pH 10, and pH 12, respectively, were performed to obtain a water-soluble pea polysaccharides Z3, and Z4 (Comparative Examples 8 and 9).

In the preparation of water-soluble pea polysaccharides Z2 to Z4 in Comparative Examples 7 to 9, same steps except for that the raw material for the extraction was subjected to pea fiber A were performed to obtain water-soluble pea polysaccharides A2 to A4 (Comparative Examples 10 to 12).

(Examples 13 to 24)

In the preparation of water-soluble pea polysaccharides Z2 to Z4 in Comparative Examples 7 to 9, same steps except for that the raw material for the extraction was subjected to pea fiber materials B, C, D and G, respectively, were performed to obtain water-soluble pea polysaccharides B2 to B4, C2 to C4, F2 to F4, and G2 to G4 (Examples 13 to 24).

(Comparative Examples 13 to 15)

In the preparation of water-soluble pea polysaccharides Z2 to Z4 in Comparative Examples 7 to 9, same steps except for that the raw material for the extraction was subjected to pea fiber H were performed to obtain water-soluble pea polysaccharides H2 to H4 (Comparative Examples 13 to 15).

The methyl esterification degrees of water-soluble pea polysaccharides Z, A to H, Z2 to Z4, A2 to A4, B2 to B4, C2 to C4, F2 to F4, G2 to G4, and H2 to H4 were shown in Table 2.

Table 2: Methyl esterification degree

| Water-soluble pea polysaccharide | | Methyl esterification degree (%) | Water-soluble pea polysaccharide | | Methyl esterification degree (%) |
|---|---|---|---|---|---|
| Water-soluble pea polysaccharide | Z | 63.9 | Water-soluble pea polysaccharide | D | 58.8 |
| | Z2 | 47.9 | Water-soluble pea polysaccharide | E | 58.4 |
| | Z3 | 32.1 | Water-soluble pea polysaccharide | F | 62.2 |
| | Z4 | 11 | | F2 | 49.6 |
| Water-soluble pea polysaccharide | A | 59.1 | | F3 | 32.6 |
| | A2 | 45 | | F4 | 12.1 |
| | A3 | 30.9 | Water-soluble pea polysaccharide | G | 60 |
| | A4 | 9.5 | | G2 | 47 |
| Water-soluble pea polysaccharide | B | 58.6 | | G3 | 36.3 |
| | B2 | 45.1 | | G4 | 11.9 |
| | B3 | 33.7 | Water-soluble pea polysaccharide | H | 63.5 |
| | B4 | 13.6 | | H2 | 48.2 |
| Water-soluble pea polysaccharide | C | 61.7 | | H3 | 30.1 |
| | C2 | 48.4 | | H4 | 13.7 |
| | C3 | 35.1 | | | |
| | C4 | 14.2 | | | |

(Preparation of acidic milk beverage)

The acidic milk beverages were prepared by using water-soluble pea polysaccharides Z, A, B to H, which had high methyl esterification degree (over 55%), and HM-pectin, respectively, and evaluated.

(Example 25) Preparation of acidic milk beverage (Protein content: 2.8%, Stabilizer: 0.4%) (1)

Skim milk powder (Yotsuba Milk Products Co., Ltd.) was dissolved to obtain 21% aqueous solution. The solution was pasteurized by heating at 95°C with stirring. The solution was cooled and inoculated with a commercially available plain yogurt, and fermented until the pH was 4.7 in an incubator at 40°C. The fermented yogurt was homogenized through a homogenizer at a pressure of 150kgf/cm$^2$ to prepare fermented milk liquid. Mixed solutions were prepared by mixing 20 parts of 2% aqueous solution of water-soluble pea polysaccharides B to G, respectively, 14 parts of 50% aqueous solution of granulated sugar, and 26 parts of water, and cooled to 4°C. To the mixed solution, 40 parts of the cooled fermented milk liquid was added with stirring, and the solution was adjusted to predefined pHs between pH 4.6 and pH 3.4 with 50% lactic acid solution. The obtained solution was homogenized with a homogenizer (150kgf/cm$^2$) and poured into a glass bottle. The bottle was sealed and heated in a water bath at 80°C for 20 minutes for pasteurization.

(Comparative Example 16)

In the preparation of the acidic milk beverage of Example 25, instead of water-soluble pea polysaccharides B to G, water-soluble pea polysaccharides Z, A, H, and water-soluble soybean polysaccharide (SOYAFIVE S-LA200: manufactured by Fuji Oil Co., Ltd.), and HM-pectin (GENUPECTIN type USP-H: manufactured by CP Kelco Co., Ltd.) were used to prepare acidic milk beverages in the same steps.

(Evaluation of acidic milk beverage)

Stability of the prepared acidic milk beverage was evaluated by its viscosity, precipitation rate, and supernatant, and overall evaluation thereof. Each of the measurement and evaluation methods is described below.

[Viscosity]

Viscosity of the prepared acidic milk beverage after 16 days storage was measured with a BM viscometer with using No.1 or No.2 rotor at 60 rpm and at 10°C.

[Precipitation rate]

Twenty grams of the prepared acidic milk beverage after 16 days storage was poured into a centrifuge tube and centrifuged with a Kokusan centrifugal at 2,000rpm for 20 minutes. The supernatant was removed by decantation, and weight of the precipitate was measured. The precipitation rate is calculated by the following equation.

```
Precipitation  rate  (%)=(precipitate  weight)/(fractionated

acidic milk beverage weight)×100
```

The precipitation rate of, less than 1% was evaluated as ⊙ (very good), 1% or more and less than 2% was evaluated as ○ (good), 2% or more and less than 3% was evaluated as △ (moderate), and more than 3% was evaluated as × (bad).

[Supernatant]

The height of the supernatant (mm) on the top of the solution was visually observed in 100 ml of the beverage in the screw bottle after 16 days standing. The height of the supernatant of, 0 mm was evaluated as ⊙ (very good), 1 mm was evaluated as ○ (good), 2 to 5 mm was evaluated as △ (moderate), and more than 6 mm was evaluated as × (bad).

[Overall evaluation]

Among the above evaluations of precipitation rate and supernatant, more bad evaluation was employed as an overall evaluation.
A product evaluated as ○ or ⊙ in the overall evaluation was considered as acceptable.
The evaluation result of the acidic milk beverage was shown in Table 3.

Table 3: Stability of acidic milk beverage (protein concentration: 2.8%, stabilizer: 0.4%) (1)

| Stabilizer | Beverage pH | Acidic protein beverage Evaluation | | | | Stabilizer | Beverage pH | Acidic protein beverage Evaluation | | | |
|---|---|---|---|---|---|---|---|---|---|---|---|
| | | Viscosity (cp) | Precipitation rate (%) | Supernatant (mm) | Overall evaluation | | | Viscosity (cp) | Precipitation rate (%) | Supernatant (mm) | Overall evaluation |
| Water-soluble pea polysaccharide Z | 3.4 | 71 | 18.97 | 12 | × | Water-soluble pea polysaccharide F | 3.4 | 20 | 0.96 | 0 | ⊙ |
| | 3.6 | 30 | 2.8 | 5 | Δ | | 3.6 | 17 | 0.94 | 0 | ⊙ |
| | 4 | 15 | 0.96 | 1 | ○ | | 4 | 15 | 0.83 | 0 | ⊙ |
| | 4.4 | 35 | 2.71 | 4 | Δ | | 4.4 | 16 | 0.88 | 0 | ⊙ |
| | 4.6 | 100 | 21.1 | 23 | × | | 4.6 | 27 | 2.69 | 2 | Δ |
| Water-soluble pea polysaccharide A | 3.4 | 40 | 2.94 | 5 | Δ | Water-soluble pea polysaccharide G | 3.4 | 25 | 1.78 | 1 | ○ |
| | 3.6 | 26 | 2.48 | 5 | Δ | | 3.6 | 18 | 0.93 | 0 | ⊙ |
| | 4 | 16 | 0.99 | 0 | ⊙ | | 4 | 17 | 0.94 | 0 | ⊙ |
| | 4.4 | 22 | 1.85 | 2 | Δ | | 4.4 | 19 | 1.26 | 1 | ○ |
| | 4.6 | 102 | 26.49 | 16 | × | | 4.6 | 28 | 3.33 | 3 | × |
| Water-soluble pea polysaccharide B | 3.4 | 25 | 1.94 | 1 | ○ | Water-soluble pea polysaccharide H | 3.4 | 40 | 2.8 | 5 | Δ |
| | 3.6 | 18 | 1.24 | 0 | ○ | | 3.6 | 24 | 2.22 | 3 | Δ |
| | 4 | 15 | 0.97 | 0 | ⊙ | | 4 | 17 | 1.28 | 0 | ○ |
| | 4.4 | 16 | 1.65 | 1 | ○ | | 4.4 | 36 | 2.88 | 5 | Δ |
| | 4.6 | 26 | 4.51 | 6 | × | | 4.6 | 98 | 16.44 | 19 | × |
| Water-soluble pea polysaccharide C | 3.4 | 19 | 1.36 | 0 | ○ | Water-soluble soybean polysaccharide (methyl esterification degree: 58.7%) | 3.4 | 19 | 1.41 | 0 | ○ |
| | 3.6 | 16 | 0.91 | 0 | ⊙ | | 3.6 | 15 | 0.88 | 0 | ⊙ |
| | 4 | 17 | 0.89 | 0 | ⊙ | | 4 | 14 | 0.84 | 0 | ⊙ |
| | 4.4 | 16 | 0.98 | 0 | ⊙ | | 4.4 | 42 | 4.18 | 5 | x |
| | 4.6 | 25 | 2.49 | 2 | Δ | | 4.6 | 140 | 24.5 | 16 | × |
| Water-soluble pea polysaccharide D | 3.4 | 18 | 0.95 | 0 | ⊙ | HM pectin (methyl esterification degree: 68.9%) | 3.4 | 280 | 12.29 | 3 | × |
| | 3.6 | 17 | 0.92 | 0 | ⊙ | | 3.6 | 65 | 1.67 | 0 | ○ |
| | 4 | 14 | 0.85 | 0 | ⊙ | | 4 | 29 | 0.83 | 0 | ⊙ |
| | 4.4 | 18 | 0.97 | 0 | ⊙ | | 4.4 | 54 | 1.3 | 0 | ○ |
| | 4.6 | 25 | 2.34 | 2 | Δ | | 4.6 | 500 | 20.17 | 3 | × |

| Stabilizer | Beverage pH | Acidic protein beverage Evaluation | | | | | Stabilizer | Beverage pH | Acidic protein beverage Evaluation | | | |
|---|---|---|---|---|---|---|---|---|---|---|---|---|
| | | Viscosity (cp) | Precipitation rate (%) | Supernatant (mm) | Overall evaluation | | | | Viscosity (cp) | Precipitation rate (%) | Supernatant (mm) | Overall evaluation |
| Water-soluble pea polysaccharide E | 3.4 | 19 | 0.99 | 0 | ⊙ | | | | | | | |
| | 3.6 | 17 | 0.84 | 0 | ⊙ | | | | | | | |
| | 4 | 14 | 0.9 | 0 | ⊙ | | | | | | | |
| | 4.4 | 18 | 0.93 | 0 | ⊙ | | | | | | | |
| | 4.6 | 24 | 2.02 | 1 | Δ | | | | | | | |

With a condition of high methyl esterification degree, water-soluble pea polysaccharides Z and A from raw material having rough particle size and water-soluble pea polysaccharide H from raw material having fine particle size showed less effect of suppressing precipitation rate and supernatant, especially, at around pH 3.4 and around pH 4.6. Water-soluble pea polysaccharides B to G suppressed precipitation rate and supernatant of the acidic milk beverage in a range of pH 3.4 to 4.4, and well stabilized the acidic milk beverage. Especially water-soluble pea polysaccharides C to F stabilized in the wide pH range and showed high effect of suppressing precipitation. The stabilized acidic milk beverage had low viscosity and smooth mouthfeel.

Acidic milk beverage was prepared by using water-soluble pea polysaccharides Z2 to Z4, A2 to A4, B2 to B4, C2 to C4, F2 to F4, G2 to G4, and H2 to H4, which had different methyl esterification degree, respectively, in the same steps of Example 25, and evaluated. The result was shown in Table 4.

Table 4: Stability of acidic milk beverage (protein concentration: 2.8%, stabilizer: 0.4%) (2)

| Stabilizer | | Beverage pH | Acidic protein beverage Evaluation | | | | Stabilizer | | Beverage pH | Acidic protein beverage Evaluation | | | |
|---|---|---|---|---|---|---|---|---|---|---|---|---|---|
| | | | Viscosity (cp) | Precipitation rate (%) | Supernatant (mm) | Overall evaluation | | | | Viscosity (cp) | Precipitation rate (%) | Supernatant (mm) | Overall evaluation |
| Water-soluble pea polysaccharide | Z2 | 3.4 | 65 | 2.19 | 2 | △ | Water-soluble pea polysaccharide | F2 | 3.4 | 18 | 0.93 | 0 | ○ |
| | | 4 | 16 | 1.61 | 1 | ○ | | | 4 | 16 | 0.84 | 0 | ⊙ |
| | | 4.4 | 47 | 2.9 | 4 | △ | | | 4.4 | 16 | 0.88 | 0 | ⊙ |
| | Z3 | 3.4 | 28 | 1.63 | 0 | ○ | | F3 | 3.4 | 19 | 1.1 | 0 | ○ |
| | | 4 | 20 | 0.98 | 1 | ○ | | | 4 | 17 | 0.99 | 0 | ⊙ |
| | | 4.4 | 26 | 1.26 | 1 | ○ | | | 4.4 | 17 | 0.89 | 0 | ⊙ |
| | Z4 | 3.4 | 20 | 1.31 | 1 | ○ | | F4 | 3.4 | 16 | 0.98 | 1 | ⊙ |
| | | 4 | 17 | 1.25 | 0 | ○ | | | 4 | 18 | 0.86 | 0 | ⊙ |
| | | 4.4 | 18 | 1.48 | 1 | ○ | | | 4.4 | 16 | 0.94 | 0 | ⊙ |
| Water-soluble pea polysaccharide | A2 | 3.4 | 45 | 2.44 | 2 | △ | Water-soluble pea polysaccharide | G2 | 3.4 | 23 | 1.49 | 1 | ○ |
| | | 4 | 15 | 1.23 | 1 | ○ | | | 4 | 16 | 0.85 | 0 | ⊙ |
| | | 4.4 | 26 | 2.11 | 1 | △ | | | 4.4 | 19 | 1.08 | 0 | ○ |
| | A3 | 3.4 | 28 | 1.4 | 1 | ○ | | G3 | 3.4 | 23 | 1.21 | 0 | ○ |
| | | 4 | 18 | 1.03 | 1 | ○ | | | 4 | 19 | 0.96 | 0 | ⊙ |
| | | 4.4 | 26 | 1.33 | 1 | ○ | | | 4.4 | 21 | 1.06 | 1 | ○ |
| | A4 | 3.4 | 20 | 1.31 | 1 | ○ | | G4 | 3.4 | 24 | 1.11 | 1 | ○ |
| | | 4 | 19 | 1.04 | 0 | ○ | | | 4 | 16 | 0.9 | 0 | ⊙ |
| | | 4.4 | 19 | 1.39 | 1 | ○ | | | 4.4 | 24 | 1.05 | 0 | ○ |
| Water-soluble pea polysaccharide | B2 | 3.4 | 22 | 1.3 | 1 | ○ | Water-soluble pea polysaccharide | H2 | 3.4 | 46 | 2.57 | 5 | △ |
| | | 4 | 15 | 0.94 | 0 | ⊙ | | | 4 | 21 | 1.26 | 0 | ○ |
| | | 4.4 | 20 | 1.89 | 1 | ○ | | | 4.4 | 31 | 2.52 | 4 | △ |
| | B3 | 3.4 | 20 | 1.21 | 0 | ○ | | H3 | 3.4 | 27 | 1.37 | 0 | ○ |
| | | 4 | 16 | 0.98 | 0 | ⊙ | | | 4 | 20 | 1.2 | 1 | ○ |
| | | 4.4 | 20 | 1.01 | 0 | ○ | | | 4.4 | 23 | 1.5 | 1 | ○ |
| | B4 | 3.4 | 21 | 1.09 | 0 | ○ | | H4 | 3.4 | 19 | 1.19 | 0 | ○ |
| | | 4 | 16 | 0.89 | 0 | ⊙ | | | 4 | 19 | 1.29 | 0 | ○ |
| | | 4.4 | 15 | 1.11 | 0 | ○ | | | 4.4 | 23 | 1.4 | 1 | ○ |

14

| Stabilizer | | Beverage pH | Acidic protein beverage Evaluation | | | | Stabilizer | Beverage pH | Acidic protein beverage Evaluation | | | |
|---|---|---|---|---|---|---|---|---|---|---|---|---|
| | | | Viscosity (cp) | Precipitation rate (%) | Supernatant (mm) | Overall evaluation | | | Viscosity (cp) | Precipitation rate (%) | Supernatant (mm) | Overall evaluation |
| Water-soluble pea polysac-charide | C2 | 3.4 | 19 | 1.11 | 0 | ○ | | | | | | |
| | | 4 | 16 | 0.8 | 0 | ⊙ | | | | | | |
| | | 4.4 | 17 | 0.98 | 0 | ⊙ | | | | | | |
| | C3 | 3.4 | 18 | 1.09 | 0 | ○ | | | | | | |
| | | 4 | 14 | 0.97 | 0 | ⊙ | | | | | | |
| | | 4.4 | 17 | 0.86 | 0 | ⊙ | | | | | | |
| | C4 | 3.4 | 20 | 1.09 | 0 | ○ | | | | | | |
| | | 4 | 17 | 0.9 | 0 | ⊙ | | | | | | |
| | | 4.4 | 16 | 0.9 | 0 | ⊙ | | | | | | |

By reducing the methyl esterification degree, water-soluble pea polysaccharide Z also showed an improved stabilizing ability for the acidic milk beverage. However, water-soluble pea polysaccharides B to G showed superior effect of suppressing precipitation in all of the methyl esterification degree than that of water-soluble pea polysaccharides Z, A, and H. The one having higher methyl esterification degree showed higher improvement of stabilizing ability for acidic milk beverage.

Industrial Applicability

The present invention enables to produce a water-soluble pea polysaccharide having an excellent protein dispersion stabilizing ability by a simple method. Water-soluble pea polysaccharide obtained by this production method stabilizes protein dispersion in a wide pH range without ester decomposition reaction, and enables to provide a beverage having low viscosity and smooth mouthfeel.

**Claims**

1. A method for producing a water-soluble pea polysaccharide, comprising:

   grinding a pea fiber material, with a grinder, before, during or after removing starch or protein of the pea fiber material, to adjust that 80% or more particles of the pea fiber material are distributed in a particle size between 100 $\mu$m and 1000 $\mu$m;
   adding water to the pea fiber material;
   adjusting the pH to a range from pH 3 to pH 12 with an acid or alkali; and then
   extracting a water-soluble pea polysaccharide from the pea fiber material at 60°C or more and 150°C or less for 0.5 to 3 hours,
   wherein the pea fiber material is prepared from pea seed.

2. A method for producing a water-soluble pea polysaccharide according to claim 1, wherein the particle size is between 100 $\mu$m and 800 $\mu$m.

3. The method for producing a water-soluble pea polysaccharide according to claim 1 or 2, wherein a methyl esterification degree of the water-soluble pea polysaccharide is 45% or more.

4. The method for producing a water-soluble pea polysaccharide according to claim 1 or 2, wherein a methyl esterification degree of the water-soluble pea polysaccharide is 50% or more.

5. The method for producing a water-soluble pea polysaccharide according to claim 1 or 2, wherein a methyl esterification degree of the water-soluble pea polysaccharide is 55% or more.

**Patentansprüche**

1. Verfahren zur Herstellung eines wasserlöslichen Erbsenpolysaccharids, umfassend:

   Mahlen eines Erbsenfasermaterials mit einer Mühle vor, während oder nach der Entfernung von Stärke oder Protein aus dem Erbsenfasermaterial, um einzustellen, dass 80% oder mehr Teilchen des Erbsenfasermaterials in einer Teilchengröße zwischen 100 $\mu$m und 1000 $\mu$m verteilt sind;
   Hinzufügen von Wasser zu dem Erbsenfasermaterial;
   Einstellen des pH-Werts auf einen Bereich von pH 3 bis pH 12 mit einer Säure oder mit Alkali; und dann
   Extrahieren eines wasserlöslichen Erbsenpolysaccharids aus dem Erbsenfasermaterial bei 60 °C oder mehr und 150 °C oder weniger während 0,5 bis 3 Stunden;
   wobei das Erbsenfasermaterial aus Erbsensamen hergestellt ist.

2. Verfahren zur Herstellung eines wasserlöslichen Erbsenpolysaccharids gemäß Anspruch 1, wobei die Teilchengröße zwischen 100 $\mu$m und 800 $\mu$m liegt.

3. Verfahren zur Herstellung eines wasserlöslichen Erbsenpolysaccharids gemäß Anspruch 1 oder 2, wobei der Methylveresterungsgrad des wasserlöslichen Erbsenpolysaccharids 45% oder mehr beträgt.

**4.** Verfahren zur Herstellung eines wasserlöslichen Erbsenpolysaccharids gemäß Anspruch 1 oder 2, wobei der Methylveresterungsgrad des wasserlöslichen Erbsenpolysaccharids 50% oder mehr beträgt.

**5.** Verfahren zur Herstellung eines wasserlöslichen Erbsenpolysaccharids gemäß Anspruch 1 oder 2, wobei der Methylveresterungsgrad des wasserlöslichen Erbsenpolysaccharids 55% oder mehr beträgt.


**Revendications**

**1.** Procédé de production d'un polysaccharide de pois soluble dans l'eau, comprenant :

le broyage d'un matériau de fibre de pois, avec un broyeur, avant, pendant ou après élimination d'amidon ou de protéine du matériau de fibre de pois, pour ajuster que 80 % ou plus de particules du matériau de fibre de pois sont distribués dans une taille de particule de 100 $\mu$m à 1 000 $\mu$m ;
l'addition d'eau au matériau de fibre de pois ;
l'ajustement du pH dans un intervalle de pH 3 à pH 12 avec un acide ou un alcali ; et puis
l'extraction d'un polysaccharide de pois soluble dans l'eau à partir du matériau de fibre de pois à 60°C ou supérieur et 150°C ou inférieur pendant de 0,5 à 3 heures,
dans lequel le matériau de fibre de pois est préparé à partir de semence de pois.

**2.** Procédé de production d'un polysaccharide de pois soluble dans l'eau selon la revendication 1, dans lequel la taille de particule est de 100 $\mu$m à 800 $\mu$m.

**3.** Procédé de production d'un polysaccharide de pois soluble dans l'eau selon la revendication 1 ou 2, dans lequel un degré d'estérification de groupe méthyle du polysaccharide de pois soluble dans l'eau est de 45 % ou supérieur.

**4.** Procédé de production d'un polysaccharide de pois soluble dans l'eau selon la revendication 1 ou 2, dans lequel un degré d'estérification de groupe méthyle du polysaccharide de pois soluble dans l'eau est de 50 % ou supérieur.

**5.** Procédé de production d'un polysaccharide de pois soluble dans l'eau selon la revendication 1 ou 2, dans lequel un degré d'estérification de groupe méthyle du polysaccharide de pois soluble dans l'eau est de 55 % ou supérieur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0759512 A
- WO 2012176852 A1
- WO 2015020024 A
- EP 0251163 A
- WO 9115517 A
- WO 2014103987 A
- WO 2012176852 A
- WO 2013191030 A
- WO 2014103833 A

**Non-patent literature cited in the description**

- **NAKAMURA A et al.** *Food Hydrocolloids,* 2003, vol. 17, 333-343